# EUROPEAN PATENT APPLICATION

(11) **EP 2 466 135 A2**
(43) Date of publication of application: **20.06.2012**
(21) Application number: 11193320.6
(22) Date of filing: 13.12.2011
(51) Int. Cl.: F03D 11/04

(54) **Reinforcement system for wind turbine tower**

(30) Priority: 20.12.2010 US 972841
(71) Applicant: General Electric Company, Schenectady, New York 12345 (US)
(72) Inventor: Fang, Biao, Schenectady, NY New York 12345 (US); Walthers, Russell Earle, Schenectady, NY New York 12345 (US); Tichich, Nicholas Alie, Schenectady, NY New York 12345 (US); Olson, Michelle Lea, Freemont, CA California 94539 (US); Brzezinski, Ronald John, Schenectady, NY New York 12345 (US)
(74) Representative: Bedford, Grant Richard

(57) **Abstract**

A reinforcement system (50) and a method for reinforcing a tower (12) of a wind turbine (10) are disclosed. The method includes providing a tower (12), the tower (12) comprising at least one generally cylindrical tower section (20), the at least one tower section (20) having an exterior wall (22) and an interior wall (24) defming a height (26) and a thickness (28) therebetween. The method further includes performing a structural analysis of the tower (12) to identify potential load limiting locations and, after performing the structural analysis, mounting at least one reinforcing member (60) to the interior wall (24) of the at least one tower section (20) to reinforce the at least one tower section (20) at the potential load limiting locations.

## Description

The subject matter disclosed herein relates generally to wind turbines, and more particularly to systems for reinforcing the towers of wind turbines.

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

As the sizes of wind turbines generally increase, the towers of the wind turbines may be modified to accommodate these increases. Thus, specific towers may be designed for specific classes and sizes of wind turbines. However, in many cases, the towers must also be designed to account for various environmental conditions, such as seismic conditions, soil conditions, and/or other inshore or offshore conditions. Because environmental conditions vary from location to location, each tower may require tailoring to the environmental conditions of a specific location.

One prior art solution for designing towers to account for various environmental conditions is to individually design a singular tower or group of towers for a specific wind turbine and for the specific environmental conditions of a specific location. However, this approach requires a multitude of individual tower designs. Designing and manufacturing each of these individual designs is both costly and time-consuming.

Another prior art solution for designing towers to account for various environmental conditions is to design a tower for a specific wind turbine and for the worst case environmental conditions for a variety of locations. However, because worst case scenarios are taken into account for this approach, the towers that result from this approach may be over-engineered and generally, for example, larger and heavier than necessary for many locations. Further, the resulting towers are costly to manufacture, transport, and erect.

Thus, an improved system and method for designing wind turbine towers would be desired. For example, a system and method that allows for efficient and cost-effective design and manufacture of towers which may be used in various locations with various environmental conditions would be advantageous.

Various aspects and advantages of the invention will be set forth in part in the following description, or may be clear from the description, or may be learned through practice of the invention.

In one embodiment, a reinforcement system for a tower of a wind turbine is disclosed. The reinforcement system includes at least one generally cylindrical tower section, the at least one tower section having an exterior wall and an interior wall defining a height and a thickness therebetween. The reinforcement system further includes at least one generally cylindrical reinforcing member mounted to the interior wall of the at least one tower section, the at least one reinforcing member having an exterior wall and an interior wall defining a height and a thickness therebetween, the exterior wall of the at least one reinforcing member having a contour that generally corresponds to the contour of the interior wall of the at least one tower section. The at least one reinforcing member interacts with the at least one tower section to reinforce the at least one tower section.

In another embodiment, a reinforcement system for a tower of a wind turbine is disclosed. The reinforcement system includes at least one generally cylindrical tower section, the at least one tower section having an exterior wall and an interior wall defining a height and a thickness therebetween. The reinforcement system further includes at least one generally arcuate reinforcing member extending through at least a portion of the height of the at least one tower section and mounted to the interior wall of the at least one tower section, the at least one reinforcing member having an exterior wall and an interior wall defining a height, a width, and a thickness therebetween, the exterior wall of the at least one reinforcing member having a contour that generally corresponds to the contour of the interior wall of the at least one tower section. The at least one reinforcing member further includes a rib extending from the interior wall of the at least one reinforcing member. The at least one reinforcing member interacts with the at least one tower section to reinforce the at least one tower section.

In another embodiment, a method for reinforcing a tower of a wind turbine is disclosed. The method includes providing a tower, the tower comprising at least one generally cylindrical tower section, the at least one tower section having an exterior wall and an interior wall defining a height and a thickness therebetween. The method further includes performing a structural analysis of the tower to identify potential load limiting locations and, after performing the structural analysis, mounting at least one reinforcing member to the interior wall of the at least one tower section to reinforce the at least one tower section at the potential load limiting locations.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 is a perspective view of a wind turbine according to one embodiment of the present disclosure;
FIG. 2 is a perspective view of a reinforcement system according to one embodiment of the present disclosure;
FIG. 3 is a cross-sectional view of a reinforcement system according to one embodiment of the present disclosure, along the lines 3--3 of FIG. 2;
FIG. 4 is a cross-sectional view of a reinforcement system according to one embodiment of the present disclosure, along the lines 4--4 of FIG. 3;
FIG. 5 is a perspective view of a reinforcement system according to another embodiment of the present disclosure; and,
FIG. 6 is a cross-sectional view of a reinforcement system according to another embodiment of the present disclosure, along the lines 6--6 of FIG. 5.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

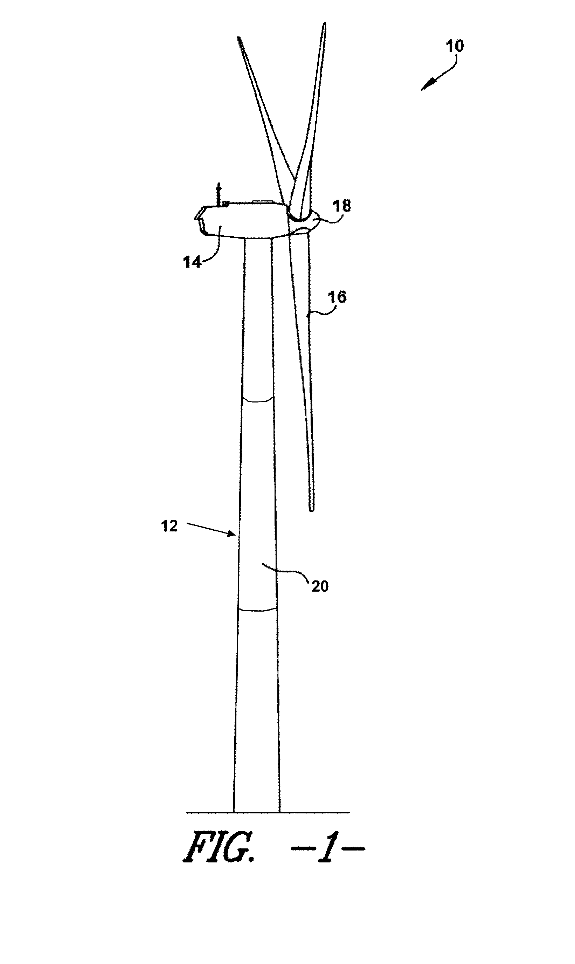

FIG. 1 illustrates a wind turbine 10 of conventional construction. The wind turbine 10 includes a tower 12 with a nacelle 14 mounted thereon. A plurality of rotor blades 16 are mounted to a rotor hub 18, which is in turn connected to a main flange that turns a main rotor shaft, as discussed below. The wind turbine power generation and control components are housed within the nacelle 14. The view of FIG. 1 is provided for illustrative purposes only to place the present invention in an exemplary field of use. It should be appreciated that the invention is not limited to any particular type of wind turbine configuration.

As further shown in FIG. 1, the tower 12 according to the present disclosure may be formed from a plurality of tower sections 20. As discussed below, each of the plurality of tower sections 20 may be disposed adjacent and coupled to another of the plurality of tower sections 20 to at least partially form the tower 12. In exemplary embodiments, the tower sections 20 may be formed from a suitable metal or metal alloy, such as carbon steel. Alternatively, however, the tower sections 20 may be formed from any suitable materials, such as, for example, various suitable composite materials.

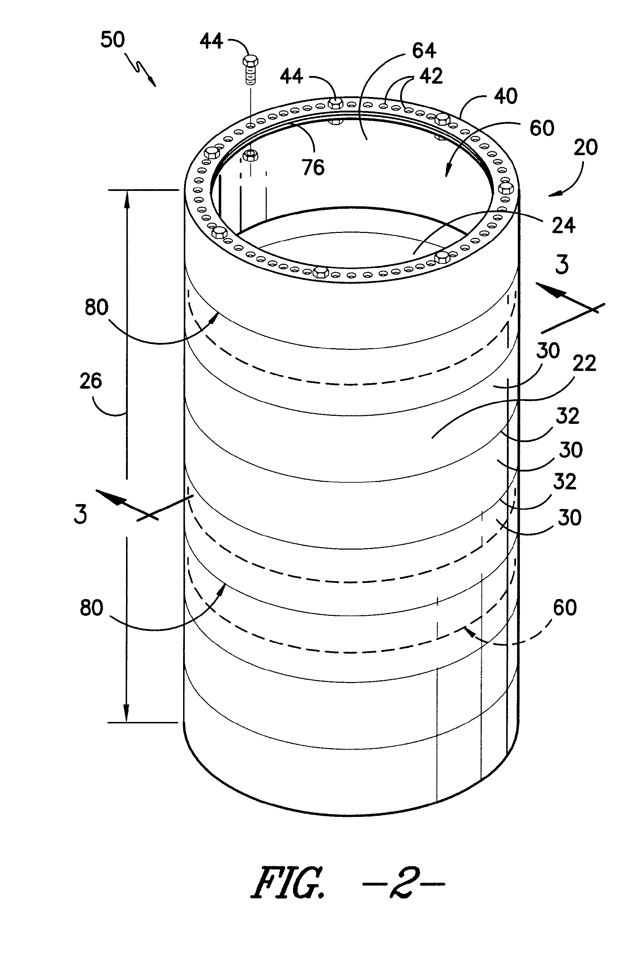

FIGS. 2 through 6 illustrate one embodiment of a tower section 20 according to the present disclosure. As shown, in exemplary embodiments, the tower section 20 may be a generally cylindrical tower section 20. For example, the cross-sectional shape of the tower section 20 may be generally circular or oval. Further, in some embodiments, the cross-sectional shape of the tower section 20 may be generally polygonal, having a plurality of sides such that the polygonal cross-section approximates a generally circular or oval cross-section.

The tower section 20 according to the present disclosure has an exterior wall 22 and an interior wall 24. The exterior wall 22 and the interior wall 24 may each be generally cylindrical, as discussed above with regard to the tower section 20 in general. The exterior wall 22 and interior wall 24 may generally define a height 26 of the tower section 20. The exterior wall 22 and interior wall 24 may further generally define a thickness 28 of the tower section 20 therebetween.

As further shown in FIGS. 2, 3, 5 and 6, each of the tower sections 20 may, in some embodiments, comprises a plurality of tower cans 30. Each of the tower cans 30 may be a generally cylindrical portion of the tower section 20, and may define a portion of the height 26 of the tower section 20 as well as the thickness 28 of the tower section 20. Each of the plurality of tower cans 30 may be disposed adjacent and coupled to another of the plurality of tower cans 30 to at least partially form the tower section 20. For example, a plurality of tower cans 30 may be stacked end to end to form the tower section 20. Further, the tower cans 30 may be coupled together by, for example, welding the tower cans 30 together at intersections 32 between the adjacent tower cans 30. It should be understood, however, that the present disclosure is not limited to welding, and that any suitable fastening device or method may be utilized to couple the tower cans 30 together.

It should be understood that the cross-sectional area of the tower section 20, and thus the tower cans 30, may remain constant or may taper through the height 26 of the tower section or portions thereof. For example, in some embodiments, the cross-sectional area of each of the tower cans 30 and tower sections 20 may decrease through the height 26 or a portion thereof. Further, it should be understood that the tower sections 20 comprising the tower 12 may all taper or may all have generally constant cross-sections, or one or more of the tower sections 20 may taper while other of the tower sections 20 may have generally constant cross-sections.

As discussed above, each of the plurality of tower sections 20 may be disposed adjacent and coupled to another of the plurality of tower sections 20 to at least partially form the tower 12. For example, a plurality of tower sections 20 may be stacked end to end to form the tower 12. Further, each of the tower sections 20 may comprise at least one flange 40 or a plurality of flanges 40. The flanges 40 may be configured to couple the tower section 20 to an adjacent tower section 20. For example, each flange 40 may be disposed at an end of the tower section 20. In exemplary embodiments, the flange 40 may define a plurality of bore holes 42. The bore holes 42 may be spaced generally circumferentially about the flange 40. The bore holes 42 may be configured to accept a mechanical fastener 44, such as a nut and bolt combination, a rivet, a screw, or any other suitable mechanical fastener 44, therethrough. To couple the tower section 20 to an adjacent tower section 20, the flange 40 may be mated with an adjacent flange 40 of the adjacent tower section 20, and the bore holes 42 of the mating flanges 40 aligned. Mechanical fasteners 44 may be placed through at least a portion of the mating bore holes 42 to couple the tower sections 20 together. It should be understood, however, that the present disclosure is not limited to tower sections 20 having flanges 40 as described above, and rather that any suitable fastening device or method may be utilized to couple the tower sections 20 together.

Due to the various environmental conditions that exist at the various locations where wind turbines 10 may be erected, it would be beneficial to have the ability to tailor the tower 12 of a wind turbine to the specific environmental conditions of the location where that tower 12 will be erected. Thus, a reinforcement system 50 for the tower 12 is disclosed. As discussed below, the reinforcement system 50 allows for a tower 12 to be designed and manufactured for a wind turbine 10 for use in a variety of locations with a variety of environmental conditions, such as seismic conditions, soil conditions, and/or other inshore or offshore conditions. The design of the tower 12 need only be tailored to, for example, the size and characteristics of the wind turbine 10. After the tower 12 is manufactured and the location of the tower 12 determined, the reinforcement system 50 may be utilized to further individually tailor the tower 12 to the specific environmental conditions of that location. Thus, the reinforcement system 50 allows for the efficient and cost-effective design and manufacture of towers 12 which may be used in various locations with various environmental conditions. Further, the reinforcement system 50 may allow for existing wind turbines 12 to be upgraded with, for example, heavier components, without requiring replacement of the tower 12. Rather, before, during, or after the upgrade, the reinforcement system 50 may be utilized with the tower 12 to tailor the tower 12 for the upgrade.

The reinforcement system 50, as shown in FIGS. 2 through 6, includes at least one tower section 20 or a plurality of tower sections 20. Further, as discussed below, the reinforcement system 50 includes at least one reinforcing member 60 or a plurality of reinforcing members 60. The reinforcing members 60 interact with the at least one tower section 20 to reinforce the at least one tower section 20.

FIGS. 2 through 4 illustrate one embodiment of a reinforcing member 60. The reinforcing member 60 according to this embodiment is a generally cylindrical reinforcing member 60. The reinforcing member 60 has an exterior wall 62 and an interior wall 64. The exterior wall 62 and interior wall 64 may generally define a height 66 of the reinforcing member 60. The exterior wall 62 and interior wall 64 may further generally define a thickness 68 of the reinforcing member 60 therebetween. If a plurality of reinforcing members 60 according to this embodiment are provided in the reinforcement system 50 for a tower section 20, the reinforcement members 60 may be spaced apart or positioned proximate each other along the height 26 of a tower section 20.

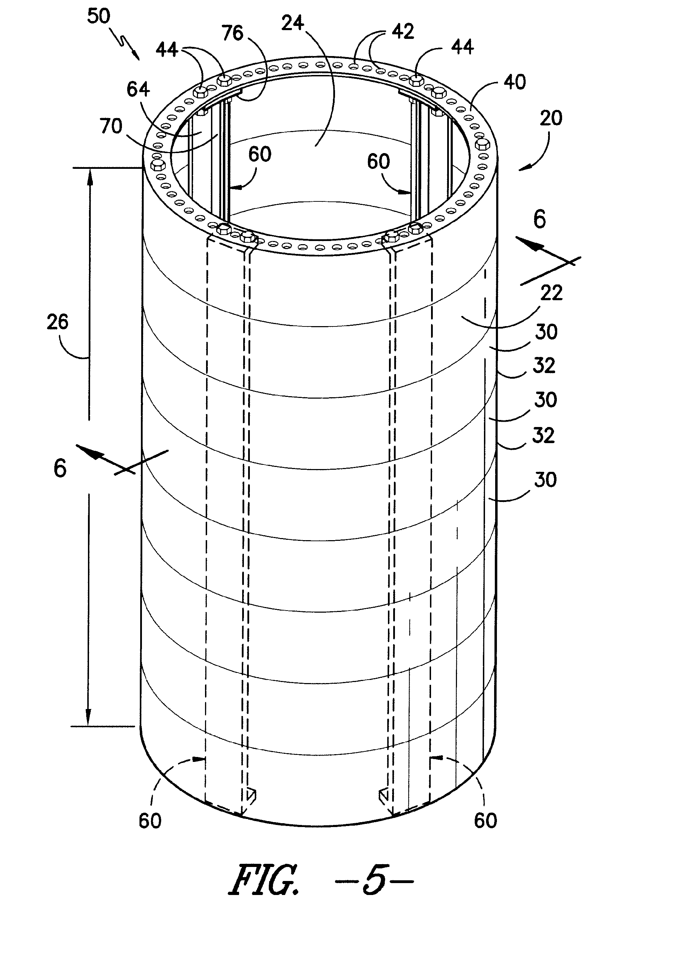

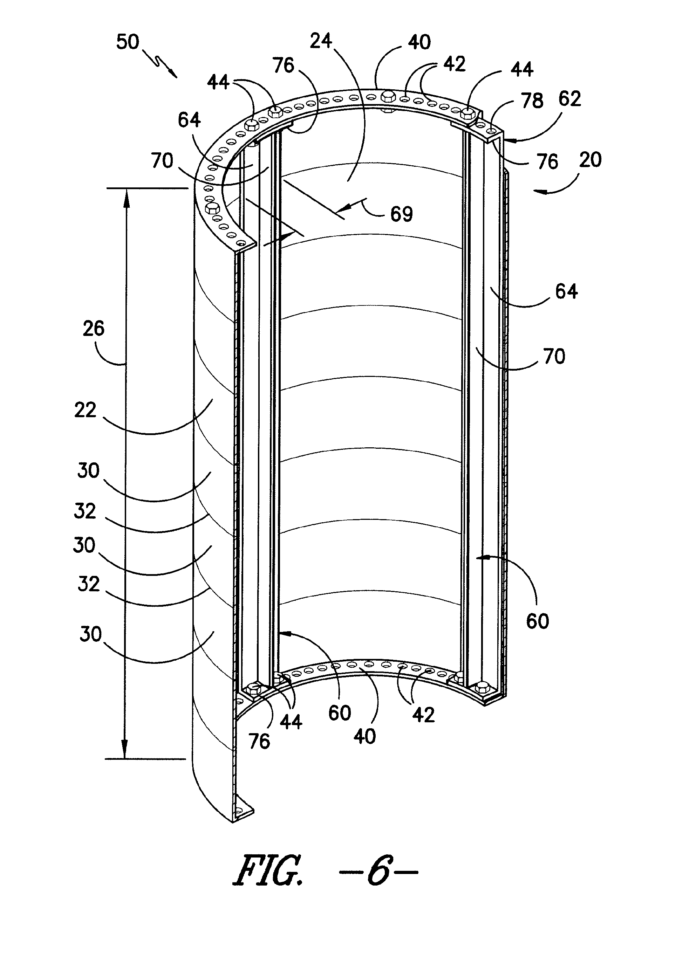

FIGS. 5 and 6 illustrate another embodiment of a reinforcing member 60. The reinforcing member 60 according to this embodiment also has a exterior wall 62 and an interior wall 64 generally defming a height 66 and a thickness 68 of the reinforcing member 60 therebetween. In this embodiment, the reinforcing member 60, rather than being generally cylindrical, may be a generally arcuate reinforcing member 60 further defining a width 69. If a plurality of reinforcing members 60 according to this embodiment are provided in the reinforcement system 50 for a tower section 20, the reinforcement members 60 may be spaced apart or positioned proximate each other about the circumference of a tower section 20, and/or may further be spaced apart or positioned proximate each other along the height 26 of a tower section 20.

As shown in FIGS. 5 and 6, the reinforcing members 60 may, in some embodiments, further comprise a rib 70 or a plurality of ribs 70. The ribs 70 may extend from the interior wall 64 of the reinforcing member 60, and may stabilize and reinforce the reinforcing members 60, thus providing further reinforcement to the tower section 20. The ribs 70 may extend through the entire height 66 of the reinforcing members 60, or through only a portion of the height 66. For example, in exemplary embodiments wherein the reinforcing members 60 comprise flanges, as discussed below, the ribs 70 may extend through generally the entire height 66 of the reinforcing members 60 between the flanges, and may abut against the ends of the flanges. This interaction with the reinforcing members 60 and the flanges may provide further reinforcement of the tower section 20. In some embodiments, as shown in FIGS. 5 and 6, a reinforcing member 60 may comprise one rib 70. The rib 70 may be located in the center of the reinforcing member 60 with respect to the width 69, or at an outer edge, or at any other width-wise location. Alternatively, a reinforcing member 60 may comprise two or more ribs 70. The ribs 70 may be located at any suitable width-wise locations on the reinforcing member 60.

In general, the reinforcing member 60 may be mounted to the interior wall 24 of the tower section 20. Thus, in exemplary embodiments, the exterior wall 62 of the reinforcing member 60 may have a contour that generally corresponds to the countour of the interior wall 24 of the tower section 20. This may allow the reinforcing member 60 to be mounted generally flush to the interior wall 24 of the tower section 20.

The reinforcing member 60 may be formed from, for example, a metal or metal alloy, such as a carbon steel. Alternatively, the reinforcing member 60 may be formed from any suitable material such as, for example, fiberglass, carbon glass, polyester, or a suitable composite material. In some exemplary embodiments, the reinforcing member 60 and the tower section 20 may be formed from the same material, such as a carbon steel, such that the thermal expansion properties of the reinforcing member 60 and the tower section 20 are generally similar or identical.

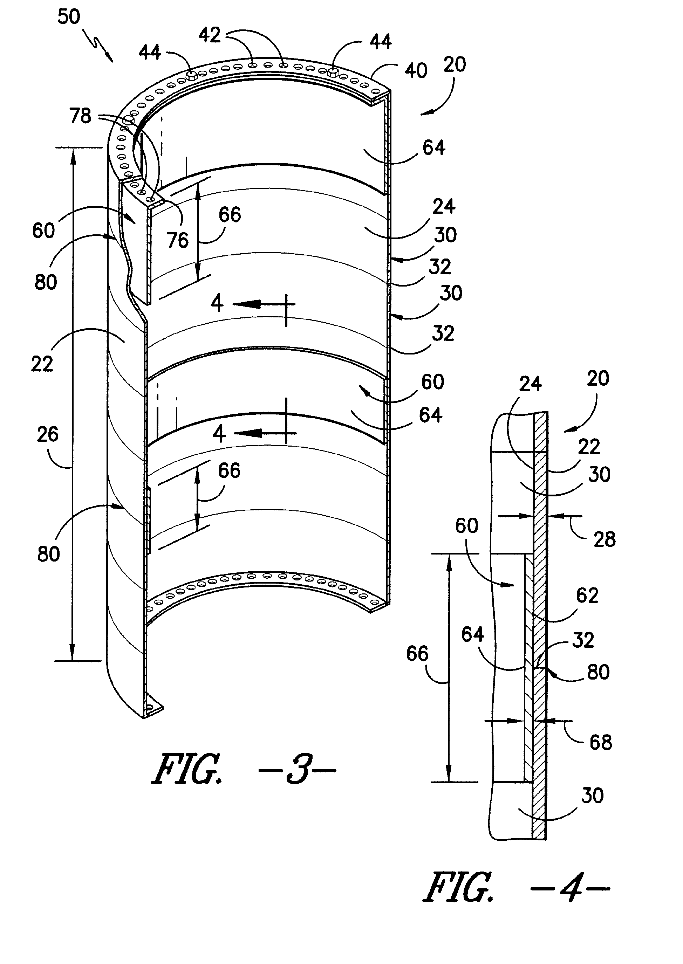

As shown in FIG. 4, in some exemplary embodiments, the thickness 68 of the reinforcing member 60 may be less than the thickness 28 of the tower section 20. However, it should be understood that the present disclosure is not limited to reinforcing members 60 which are thinner than tower sections 20, and rather that reinforcing members 60 that are of equal thickness or thicker than the tower sections 20 are within the scope and spirit of the present disclosure. Further, in some exemplary embodiments, the thickness 68 of the reinforcing member 60 may be in the range between approximately 5 millimeters and approximately 10 millimeters. However, it should be understood that the present disclosure is not limited to reinforcing members 60 with thicknesses in the above disclosed range, and rather that reinforcing members 60 with any suitable thicknesses are within the scope and spirit of the present disclosure.

The reinforcing member 60 of the present disclosure may extend through at least a portion of the height 26 of the tower section 20. Thus, the height 66 of the reinforcing member 60 may be less than the height 26 of the tower section 20, or may be approximately equal to the height 66 of the tower section 20.

Further, the reinforcing members 60 in the embodiments as shown in FIGS. 5 and 6 may extend generally vertically, as shown, or may extend generally diagonally at any suitable angle. In diagonal embodiments, as well as in any other suitable embodiments, a truss or a plurality of trusses (not shown) may be mounted to the reinforcing members 60, and may extend between various of the reinforcing members 60, as required or desired to further reinforce the reinforcing members 60 and the tower section 20.

It should be understood that the height 66, thickness 68, width 69, ribs 70, and positioning and angles of each reinforcing member 60 according to the present disclosure may be optimized to provide optimal reinforcement of the tower sections 20 and tower 12 in general. Thus, the height 66, thickness 68, width 69, ribs 70, and positioning and angles of the reinforcing members 60 may vary depending on, for example, the characteristics of the tower sections 20 and tower 12 in general, and further depending on the environmental conditions at the location of the tower 12.

As discussed above, the reinforcing member 60 may be mounted to the interior wall 24 of the tower section 20. In some embodiments, the reinforcing member 50 may be welded, glued, fastened with a suitable mechanical fastener, or otherwise directly mounted to the interior wall 24 of the tower section 20. Alternatively, a reinforcing member 60 may be mounted to a tower section 20 by coupling the reinforcing member 60 to a flange 40 of the tower section 20. For example, the reinforcing member 60 may comprise at least one flange 76 or a plurality of flanges 76. The flanges 76 may be configured to couple the reinforcing member 60 to the tower section 20. For example, each flange 76 may be disposed on an end of the reinforcing member 60. In exemplary embodiments, the flange 76 may define a bore hole 78 or a plurality of bore holes 78. The bore holes 78 may be positioned and spaced such that they will align with at least a portion of the bore holes 42 in a flange 40. The bore holes 78 may be configured to accept a mechanical fastener 44 therethrough. To couple the reinforcing member 60 to the tower section 20, the flange 76 or flanges 76 of the reinforcing member 60 may be mated with the flange 40 or flanges 40 of the tower section 20, and the bore holes 78 of the flanges 76 aligned with the bore holes 42 of the flanges 40. Mechanical fasteners 44 may be placed through at least a portion of the mating bore holes 76 and 42 to couple the reinforcing member 60 and the tower section 20 together. It should be understood, however, that the present disclosure is not limited to reinforcing members 60 and tower sections 20 having flanges 76 and 40 as described above, and rather that any suitable fastening device or method may be utilized to couple a reinforcing member 60 and tower section 20 together.

As discussed above, the reinforcing members 60 according to the present disclosure interact with the tower sections 20 to reinforce the tower sections 20, and the tower 12 in general. For example, in some embodiments as shown in FIGS. 2 through 4, the tower sections 20 may each define a critical location 80 or a plurality of critical locations 80. A critical location 80, according to the present disclosure, may be a relatively weaker or vulnerable location on the tower section 20 that may limit the loads that the tower 12 or tower section 20 may be subjected to or may constitute a potential failure location. A reinforcing member 60 may thus interact with the tower section 20 at a critical location 80 to reinforce the tower section 20 at that critical location 80.

For example, in some embodiments, a critical location 80 may be an intersection 32 between adjacent tower cans 30. Thus, a reinforcing member 60, such as in exemplary embodiments a generally cylindrical tower section 60, may be mounted to the interior wall 24 of the tower 20 at the intersection 32 to reinforce the tower section 20 at the intersection 32.

In other embodiments as shown in FIGS. 5 and 6, the reinforcing members 60 may be configured to reduce potential structural failures of the tower section 20. For example, a tower section 20 may be particularly susceptible to a certain form of structural failure, such as, for example, buckling, fatigue, fracture, or any other potential structural failure. The reinforcing members 60 may be configured to reduce the potential for one or more of these forms of structural failure. For example, reinforcing members 60 may be mounted to the tower section 20 at various locations where it has been determined that the tower section 20 is more likely to fail, and the reinforcing members 60 may thus reinforce the tower section 20 at these locations. Additionally or alternatively, the reinforcing members 60 may be mounted to a specific tower section 20 or sections 20 of the tower 12 that has been determined is more likely than other tower sections 20 to fail, and the reinforcing member 60 may thus reinforce this tower section 20.

The present disclosure is further directed to a method for reinforcing a tower 12 of a wind turbine 10. The method may include, for example, providing a tower 12. The tower 12 may include at least one generally cylindrical tower section 20, as discussed above.

The method may further include, for example, performing a structural analysis of the tower 12, such as of a tower section 20 or tower sections 20, to identify potential load limiting locations. The structural analysis may be, for example, a seismic analysis of the tower 12 or tower section 20, or any other suitable structural analysis. Further, the structural analysis may take into account the potential environmental conditions of the location at which the tower 12 may be erected.

The structural analysis may identify potential load limiting locations. In some embodiments, the structural analysis may identify a critical location 80 or critical locations 80 on a tower section 20, which may be a potential load limiting location. For example, an intersection 32 or intersections 32 between tower cans 30 may be potential load limiting locations. Additionally or alternatively, the structural analysis may identify potential structural failure modes at certain locations on the tower section 20, which may be potential load limiting locations. For example, the structural analysis may identify a potential buckling failure location.

The method may further include, after performing the structural analysis, mounting at least one reinforcing member 60 to the interior wall 24 of a tower section 20. The reinforcing member 60 may reinforce the tower section 20 at the potential load limiting location. Thus, the reinforcing member 60 may be mounted to the tower section 20 at the potential load limiting location. Further, as discussed above, the reinforcing member 60, such as the height 66, thickness 68, width 69, ribs 70, and positioning of the reinforcing member 60, may be optimized to provide optimal reinforcement of the tower sections 20 and tower 12 in general.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A reinforcement system for a tower of a wind turbine, the reinforcement system comprising:
   at least one generally cylindrical tower section, the at least one tower section having an exterior wall and an interior wall defining a height and a thickness therebetween; and
   at least one generally cylindrical reinforcing member mounted to the interior wall of the at least one tower section, the at least one reinforcing member having an exterior wall and an interior wall defining a height and a thickness therebetween, the exterior wall of the at least one reinforcing member having a contour that generally corresponds to the contour of the interior wall of the at least one tower section,
   wherein the at least one reinforcing member interacts with the at least one tower section to reinforce the at least one tower section.
2. The reinforcement system of clause 1, further comprising a plurality of tower sections, each of the plurality of tower sections disposed adjacent and coupled to another of the plurality of tower sections to at least partially form the tower.
3. The reinforcement system of any preceding clause, wherein the at least one tower section defmes a critical location, and wherein the at least one reinforcing member interacts with the at least one tower section at the critical location to reinforce the at least one tower section.
4. The reinforcement system of any preceding clause, wherein the at least one tower section comprises a plurality of tower cans, each of the plurality of tower cans disposed adjacent and coupled to another of the plurality of tower cans to at least partially form the tower section, and wherein the critical location is an intersection between adjacent tower cans.
5. The reinforcement system of any preceding clause, wherein the thickness of the at least one reinforcing member is less than the thickness of the at least one tower section.
6. The reinforcement system of any preceding clause, wherein the thickness of the at least one reinforcing member is in the range between approximately 5 millimeters and approximately 10 millimeters.
7. The reinforcement system of any preceding clause, wherein the at least one tower section comprises at least one flange configured to couple the tower section to an adjacent tower section, and wherein the at least one reinforcing member is mounted to the at least one tower section by coupling the at least one reinforcing member to the at least one flange.
8. The reinforcement system of any preceding clause, wherein the at least one reinforcing member is formed from a carbon steel.
9. The reinforcement system of any preceding clause, further comprising a plurality of reinforcing members.
10. A reinforcement system for a tower of a wind turbine, the reinforcement system comprising:
   at least one generally cylindrical tower section, the at least one tower section having an exterior wall and an interior wall defining a height and a thickness therebetween; and
   at least one generally arcuate reinforcing member extending through at least a portion of the height of the at least one tower section and mounted to the interior wall of the at least one tower section, the at least one reinforcing member having an exterior wall and an interior wall defining a height, a width, and a thickness therebetween, the exterior wall of the at least one reinforcing member having a contour that generally corresponds to the contour of the interior wall of the at least one tower section, the at least one reinforcing member further comprising a rib extending from the interior wall of the at least one reinforcing member,
   wherein the at least one reinforcing member interacts with the at least one tower section to reinforce the at least one tower section.
11. The reinforcement system of any preceding clause, further comprising a plurality of tower sections, each of the plurality of tower sections disposed adjacent and coupled to another of the plurality of tower sections to at least partially form the tower.
12. The reinforcement system of any preceding clause, wherein the at least one reinforcing member is configured to reduce a potential buckling failure of the at least one tower section.
13. The reinforcement system of any preceding clause, wherein the at least one tower section comprises at least one flange configured to couple the tower section to an adjacent tower section, and wherein the at least one reinforcing member is mounted to the at least one tower section by coupling the at least one reinforcing member to the at least one flange.
14. The reinforcement system of any preceding clause, wherein the at least one reinforcing member is formed from a carbon steel.
15. The reinforcement system of any preceding clause, further comprising a plurality of reinforcing members.
16. A method for reinforcing a tower of a wind turbine, the method comprising:
   providing a tower, the tower comprising at least one generally cylindrical tower section, the at least one tower section having an exterior wall and an interior wall defining a height and a thickness therebetween;
   performing a structural analysis of the tower to identify potential load limiting locations; and
   after performing the structural analysis, mounting at least one reinforcing member to the interior wall of the at least one tower section to reinforce the at least one tower section at the potential load limiting locations.
17. The method of any preceding clause, wherein the at least one tower section comprises a plurality of tower cans, each of the plurality of tower cans disposed adjacent and coupled to another of the plurality of tower cans to at least partially form the tower section, and wherein the potential load limiting location is an intersection between adjacent tower cans.
18. The method of any preceding clause, wherein the potential load limiting location is a potential buckling failure location.
19. The method of any preceding clause, wherein the at least one reinforcing member is a generally cylindrical reinforcing member having an exterior wall and an interior wall defining a height and a thickness therebetween, the exterior wall of the at least one reinforcing member having a contour that generally corresponds to the contour of the interior wall of the at least one tower section.
20. The method of any preceding clause, wherein the at least one reinforcing member is a generally arcuate reinforcing member extending through at least a portion of the height of the at least one tower section and having an exterior wall and an interior wall defining a height, a width, and a thickness therebetween, the exterior wall of the at least one reinforcing member having a contour that generally corresponds to the contour of the interior wall of the at least one tower section, the at least one reinforcing member further comprising a rib extending from the interior wall of the at least one reinforcing member.

## Claims

1. A reinforcement system (50) for a tower (12) of a wind turbine (10), the reinforcement system (50) comprising:
at least one generally cylindrical tower section (20), the at least one tower section (20) having an exterior wall (22) and an interior wall (24) defining a height (26) and a thickness (28) therebetween; and
at least one generally cylindrical reinforcing member (60) mounted to the interior wall (24) of the at least one tower section (20), the at least one reinforcing member (60) having an exterior wall (62) and an interior wall (64) defining a height (66) and a thickness (68) therebetween, the exterior wall (62) of the at least one reinforcing member (60) having a contour that generally corresponds to the contour of the interior wall (24) of the at least one tower section (20),
wherein the at least one reinforcing member (60) interacts with the at least one tower section (20) to reinforce the at least one tower section (20).

2. The reinforcement system (50) of claim 1, wherein the at least one tower section (20) defines a critical location (80), and wherein the at least one reinforcing member (50) interacts with the at least one tower section (20) at the critical location (80) to reinforce the at least one tower section (20).

3. The reinforcement system (50) of any preceding claim, wherein the at least one tower section (20) comprises a plurality of tower cans (30), each of the plurality of tower cans (30) disposed adjacent and coupled to another of the plurality of tower cans (30) to at least partially form the tower section (20), and wherein the critical location (80) is an intersection (32) between adjacent tower cans (30).

4. The reinforcement system (50) of any of claims 1 to 3, wherein the thickness (68) of the at least one reinforcing member (60) is less than the thickness (28) of the at least one tower section (20).

5. The reinforcement system (50) of any of claims 1 to 4, wherein the thickness (68) of the at least one reinforcing member (60) is in the range between approximately 5 millimeters and approximately 10 millimeters.

6. The reinforcement system (50) of any of claims 1 to 5, wherein the at least one tower section (20) comprises at least one flange (40) configured to couple the tower section (20) to an adjacent tower section (20), and wherein the at least one reinforcing member (60) is mounted to the at least one tower section (20) by coupling the at least one reinforcing member (60) to the at least one flange (40).

7. A reinforcement system (50) for a tower (12) of a wind turbine (10), the reinforcement system (50) comprising:
at least one generally cylindrical tower section (20), the at least one tower section (20) having an exterior wall (22) and an interior wall (24) defining a height (26) and a thickness (28) therebetween; and
at least one generally arcuate reinforcing member (60) extending through at least a portion of the height (26) of the at least one tower section (20) and mounted to the interior wall (24) of the at least one tower section (20), the at least one reinforcing member (60) having an exterior wall (62) and an interior wall (64) defining a height (66), a width (69), and a thickness (68) therebetween, the exterior wall (62) of the at least one reinforcing member (60) having a contour that generally corresponds to the contour of the interior wall (24) of the at least one tower section (20), the at least one reinforcing member (60) further comprising a rib (70) extending from the interior wall (64) of the at least one reinforcing member (60),
wherein the at least one reinforcing member (60) interacts with the at least one tower section (20) to reinforce the at least one tower section (20).

8. The reinforcement system (50) of claim 7, wherein the at least one reinforcing member (60) is configured to reduce a potential buckling failure of the at least one tower section (20).

9. The reinforcement system (50) of any of claims 7 to 8, wherein the at least one tower section (20) comprises at least one flange (40) configured to couple the tower section (20) to an adjacent tower section (20), and wherein the at least one reinforcing member (60) is mounted to the at least one tower section (20) by coupling the at least one reinforcing member (60) to the at least one flange (40).

10. The reinforcement system (50) of any of claims 7 to 9, wherein the at least one reinforcing member (60) is formed from a carbon steel.

11. A method for reinforcing a tower (12) of a wind turbine (10), the method comprising:
providing a tower (12), the tower (12) comprising at least one generally cylindrical tower section (20), the at least one tower section (20) having an exterior wall (22) and an interior wall (24) defining a height (26)and a thickness (28) therebetween;
performing a structural analysis of the tower (12) to identify potential load limiting locations; and
after performing the structural analysis, mounting at least one reinforcing member (60) to the interior wall (24) of the at least one tower section (20) to reinforce the at least one tower section (20) at the potential load limiting locations.

12. The method of claim 11, wherein the at least one tower section (20) comprises a plurality of tower cans (30), each of the plurality of tower cans (30) disposed adjacent and coupled to another of the plurality of tower cans (30) to at least partially form the tower section (20), and wherein the potential load limiting location is an intersection between adjacent tower cans (30).

13. The method of any of claims 11 to 12, wherein the potential load limiting location is a potential buckling failure location.

14. The method of any of claims 11 to 13, wherein the at least one reinforcing member (60) is a generally cylindrical reinforcing member (60) having an exterior wall (62) and an interior wall (64) defining a height (66) and a thickness (68) therebetween, the exterior wall (62) of the at least one reinforcing member (60) having a contour that generally corresponds to the contour of the interior wall (24) of the at least one tower section (20).

15. The method of any of claims 11 to 14, wherein the at least one reinforcing member (60) is a generally arcuate reinforcing member (60) extending through at least a portion of the height (26) of the at least one tower section (20) and having an exterior wall (62) and an interior wall (64) defining a height (66), a width (69), and a thickness (68) therebetween, the exterior wall (62) of the at least one reinforcing member (60) having a contour that generally corresponds to the contour of the interior wall (24) of the at least one tower section (20), the at least one reinforcing member (60) further comprising a rib (70) extending from the interior wall (64) of the at least one reinforcing member (60).
